# FASCICULE DE BREVET EUROPEEN

(11) **EP 1 841 171 B1**
(45) Date de publication et mention de la délivrance du brevet: **15.09.2010**
(21) Numéro de dépôt: 06300304.0
(22) Date de dépôt: 30.03.2006
(51) Int. Cl.: H04L 29/06, H04L 29/12, H04L 29/08

(54) **Optimisation de la connexion entre un terminal mobile de communication et un serveur de signalisation à travers un dispositif de traduction d'adresses**
Optimierung der Verbindung zwischen einem mobilen Kommunikationsendgerät und einem Signalisierungsserver durch eine Adressenübersetzungsvorrichtung
Connection optimisation between a mobile communication terminal and a signalling server across a Network Address Translator

(43) Date de publication de la demande: 03.10.2007
(73) Titulaire: Alcatel Lucent, 75008 Paris (FR)
(72) Inventeur: Levy, Thomas, 75013 PARIS (FR)
(74) Mandataire: Chaffraix, Sylvain

(56) Documents cités:
- US-A1- 2006 029 083
- JENNINGS C ET AL: "Managing Client Initiated Connections in the Session Initiation Protocol (SIP); draft-ietf-sip-outbound-02.txt" IETF STANDARD-WORKING-DRAFT, INTERNET ENGINEERING TASK FORCE, IETF, CH, vol. sip, no. 2, 5 mars 2006 (2006-03-05), XP015044147 ISSN: 0000-0004
- ROSENBERG J WEINBERGER DYNAMICSOFT C HUITEMA MICROSOFT R MAHY CISCO J: "STUN - Simple Traversal of User Datagram Protocol (UDP) Through Network Address Translators (NATs); rfc3489.txt;" IETF STANDARD, INTERNET ENGINEERING TASK FORCE, IETF, CH, mars 2003 (2003-03), XP015009272 ISSN: 0000-0003

## Description

La présente invention concerne la transmission de flux multimédias par un réseau de communication de données. Elle s'applique particulièrement à la téléphonie sur IP (*Internet Protocol*), à la vidéophonie sur IP, etc.

Ces applications nécessitent généralement l'établissement d'une session entre les parties. Ces parties sont le plus souvent des terminaux multimédia comme des terminaux de télécommunication (terminaux GSM, UMTS etc.), des assistants numériques personnels (PDA pour *Personal Digital Assistant),* des ordinateurs etc.
Cette session est établie par une partie dite « appelante » qui « invite » d'autres parties à joindre la session. Les invitations, ainsi que d'autres messages de signalisation, sont habituellement véhiculées par un protocole de signalisation comme le protocole SIP (*Session Initiation Protocol*) défini par le RFC 3261 de l'IETF (*Internet Engineering Task Force*)*.*
Ces messages de signalisation SIP sont transmis à travers le réseau de communication à l'aide de serveurs de signalisation, communément appelés « *proxy servers* ». Ces serveurs de signalisation ont pour but principal d'interpréter les adresses contenues dans les messages de signalisation afin de les acheminer jusqu'à la partie destinatrice.

Afin que les serveurs de signalisation puissent disposer de la connaissance suffisante du réseau de communication, les terminaux doivent s'enregistrer auprès de leur serveur de signalisation. De cette façon, chaque serveur de signalisation connaît les terminaux qui lui sont rattachés et les messages de signalisation (et les appels) peuvent être convenablement transmis à travers le réseau de communication. Un tel enregistrement est typiquement effectué par le message d'enregistrement « Register » du protocole SIP.
Ce protocole comporte également un message nommé « Invite » qui permet à la partie appelante d'initialiser une session avec une partie appelée.

Le réseau global de communication (que l'on nomme communément « Internet ») peut être vu comme une interconnexion de réseaux privés de communication. Ces réseaux privés peuvent être par exemple des réseaux de communication d'entreprise. Ils sont connectés ensemble via un ou plusieurs réseaux de communication gérés par des opérateurs de communication.

Très souvent, les réseaux privés et le réseau public sont connectés par un dispositif de traduction d'adresses, nommé NAT (*Network Address Translation*) et décrit dans le RFC 3022 de l'IETF. Le but d'un tel dispositif est d'établir une association entre les adresses privées, d'usage uniquement interne au réseau privé, et des adresses publiques qui sont utilisés au sein du réseau public.
Parmi ces dispositifs NAT, il existe également des dispositifs de traduction d'adresses réseau et de ports (NAPT, *Network Address and Port Translation*) qui considèrent en sus des adresses IP, les ports indiqués dans les paquets IP. Dans ce qui suit, pour la facilité de la lecture, on considérera que l'acronyme NAT recouvre également les dispositifs NAPT ou autres dispositifs similaires : NAT bidirectionnels, NAPT à redirection des flux entrants (« *NAPT Redirect*/*Port Forwarding* »), NAT « double » (« *Twice-NAT* ») etc.
Toujours par soucis de clarté, nous appellerons « coordonnées », l'ensemble des informations contenues dans les paquets IP qui sont utilisées par un dispositif de type NAT pour identifier un équipement ou une application (adresses IP, ports...)

Le dispositif de traduction d'adresses NAT dispose d'un jeu d'adresses publiques, habituellement en nombre beaucoup plus restreint que les terminaux connectés au réseau privé. Lorsqu'un de ces terminaux souhaite accéder au réseau public, le dispositif de traduction d'adresses NAT lui attribue une adresse publique.

Dans le cadre d'un NAPT (*Network Address and Port Translation*), il peut utiliser une même adresse publique pour plusieurs adresses privées. Dans ce cas, l'association est effectué non seulement sur la base des adresses IP mais également sur les ports utilisés ou autres informations (protocoles etc.). Cette association entre les coordonnées privées et publiques est réalisée, de façon temporaire. Du point de vue du réseau public, ce terminal possède alors les coordonnées publiques attribuées par le dispositif de traduction d'adresses NAT (ou NAPT...) et ses coordonnées privées sont alors transparentes pour le réseau public.

Cette association (ou liaison, « *binding* » en langue anglaise) est nécessairement temporaire, afin de ne pas monopoliser les adresses publiques du jeu d'adresses publiques. Aussi, après un certains lapse de temps d'inutilisation, l'association est terminée et l'adresse publique attribuée redevient disponible pour une nouvelle mise en correspondante.

Cette inutilisation survient par exemple lorsqu'une connexion TUF' (*Transport Communication Protocol*) est terminée entre des parties de part et d'autre d'un dispositif de traduction d'adresses NAT. À sa terminaison, et après l'écoulement de ce lapse de temps, appelée délai d'expiration, l'association est terminée et si les deux parties souhaitent à nouveau communiquer, il leur faudra établir une nouvelle association. Cet aspect du fonctionnement d'un dispositif de traduction d'adresses est par exemple expliqué dans le document « *NAT Behavioral Requirements for Unicast UDP* » de F. Audet et C. Jennings, publié en septembre 2005 dans sa version 5, et disponible sur le site de l'IETF sous le nom de fichier « draft-letf-behave-nat-udp-05.txt ».

Un problème se pose avec le protocole SIP. En effet, celui-ci est basé sur le protocole de plus bas niveau UDP *(User Datagram Protocol*) qui, contrairement à TCP, n'implique pas l'établissement d'une connexion de bout en bout entre les parties. Avec l'utilisation du protocole TCP, il faut donc une action positive de la part d'une des parties pour interrompre la connexion TCP pour que l'association soit terminée au sein du dispositif de traduction d'adresses NAT. Mais avec l'utilisation du protocole UDP, l'association peut se terminer sans action positive, simplement par la non émission de paquets de données durant une période au moins égale au délai d'expiration.

La demanderesse a remarqué que cela posera un problème grandissant avec l'utilisation croissante du protocole SIP pour l'établissement de sessions multimédias.
Ce protocole SIP étant basé sur UDP, l'absence ou l'insuffisance de trafic de signalisation durant une session multimédia entraîne l'interruption de la session par la terminaison de l'association du dispositif de traduction d'adresses NAT.
Actuellement, ce problème est partiellement résolu par la fixation manuelle de la durée de validité des messages de signalisation du protocole SIP afin que les clients se re-enregistrent selon une périodicité inférieure au délai d'expiration du dispositif de traduction d'adresses NAT. En effet, le protocole SIP prévoit que les clients ne s'enregistrent que temporairement auprès d'un serveur de signalisation. Le message d'enregistrement « Register » comporte donc un paramètre permettant de préciser durée de validité au-delà de laquelle le serveur de signalisation interrompt sa « connexion » avec le client.
Aussi, si le client veut demeurer constamment connecté avec le serveur de signalisation, et accessible par l'ensemble du réseau de communication, il doit re-émettre périodiquement des messages d'enregistrement « Register ».

Cette technique est par exemple décrite dans la demande de brevet américaine US2006/029083, déposée le 9 février 2006 ; ou bien dans le draft IETF, « *Managing Client Initiated Connections in the Session initiation Protocol (SIP)* », de C. Jennings et R. Mahy, publié en mars 2006 sous le nom de fichier « draft-ietf-sip-outbound-02.txt ».

Cette durée de validité est habituellement négociée entre le client et le serveur de signalisation, mais elle peut être également fixée manuellement par l'opérateur,

Cette durée de validité des messages de signalisation SIP peut être fixée à une valeur délibérément courte, afin de garantir la non terminaison de l'association du dispositif de traduction d'adresses NAT.

L'opérateur peut aussi se baser sur les données constructeurs du dispositif de traduction d'adresses NAT, ou procéder à une étude statistique, afin de déterminer une valeur plus optimale de la durée de validité mieux en rapport avec le délai d'expiration de ce dispositif.

Ces procédés souffrent toutefois de graves inconvénient.

Tout d'abord, ils nécessitent l'intervention manuelle de l'opérateur. Il s'agit là d'une tâche coûteuse pour l'opérateur et susceptible de provoquer des erreurs de configuration Par exemple, si le dispositif de traduction d'adresses est changé, il faut penser à modifier la valeur de la durée de validité en fonction.

En outre, le choix d'une valeur trop faible pour la durée de validité des messages de signalisation SIP charge le réseau de communication par l'émission d'un nombre trop important de messages d'enregistrement « Register ».

Ces différents problèmes sont assez peu sensibles auiourd'hui, mais selon la demanderesse, seront amenés à prendre une importance plus cruciale, à mesure que se développe l'utilisation du protocole SIP pour l'établissement de sessions multimédias.

Ces problèmes seront rendus encore plus importants par le développement des solutions de mobilité et de nomadisme : un même terminal mobile est susceplible de se connecter à une pluralité de serveurs de signalisation en fonction, notamment, de sa position géographique. À chaque re-connexion (ou « *hand-over»* en langue anglaise), le problème de la terminaison de l'association au sein d'un dispositif de traduction d'adresses NAT se pose de nouveau.

La présente invention propose de résoudre ces problèmes, en incorporant dans les terminaux mobiles de communication, une mémoire qui associe aux réseaux d'accès une durée de validité correspondant à la période d'envoi des messages d'enregistrement.
Plus précisément, l'invention concerne un terminal mobile de communication, comportant des moyens de connexions à des réseaux d'accès et des moyens d'enregistrement pour transmettre périodiquement des messages d'enregistrement à un serveur de signalisation situé au sein d'un réseau public de communication connecté aux réseaux d'accès. Ce terminal mobile se caractérise en ce qu'il dispose en outre d'une mémoire apte à associer une durée de validité à au moins certains des réseaux d'accès et en ce que les moyens d'enregistrement sont prévus pour transmettre les messages d'enregistrement selon une période égale à la durée de validité associée au réseau d'accès auquel le terminal mobile est connecté.

Selon une mise en oeuvre de l'invention, le terminal mobile de communication dispose en outre de moyens d'apprentissage pour, à chaque fois qu'il se connecte à un nouveau réseau d'accès, déclencher une phase d'apprentissage pour déterminer une durée de validité et mettre à jour la mémoire avec l'association entre cette durée de validité et ce nouveau réseau d'accès.
Selon un mode de réalisation de l'invention, les réseaux d'accès sont identifiés par un identifiant d'un équipement unique des réseaux d'accès. Cet équipement unique est par exemple un serveur dynamique d'adresses DHCP. Ces identifiants sont par exemple des adresses MAC.

Selon un mode de réalisation de l'invention, la mémoire fait correspondre un âge à chaque association entre un réseau d'accès et une durée de validité et lorsque l'âge atteint un seuil, l'association est effacée de la mémoire afin d'éviter son engorgement.

Ainsi, par la mémorisation du délai de validité à utiliser pour certains (au moins) réseaux d'accès, le terminal mobile de communication peut établir une connexion optimale avec le serveur de signalisation. À la fois le nombre de messages de signalisation et les interruptions de connexion sont minimisés.

L'invention et ses avantages apparaîtront de façon plus claire dans la description qui va suivre en liaison avec les figures annexées :
La figure 1 schématise l'architecture générale dans laquelle s'inscrit le serveur de signalisation selon l'invention.
La figure 2 représente une architecture fonctionnelle d'un terminal de communication mobile selon l'invention.
La figure 3 schématise l'architecture fonctionnelle d'un dispositif de traduction d'adresses.
La figure 4 représente les flux d'échanges entre les différentes parties à la communication, selon l'invention.

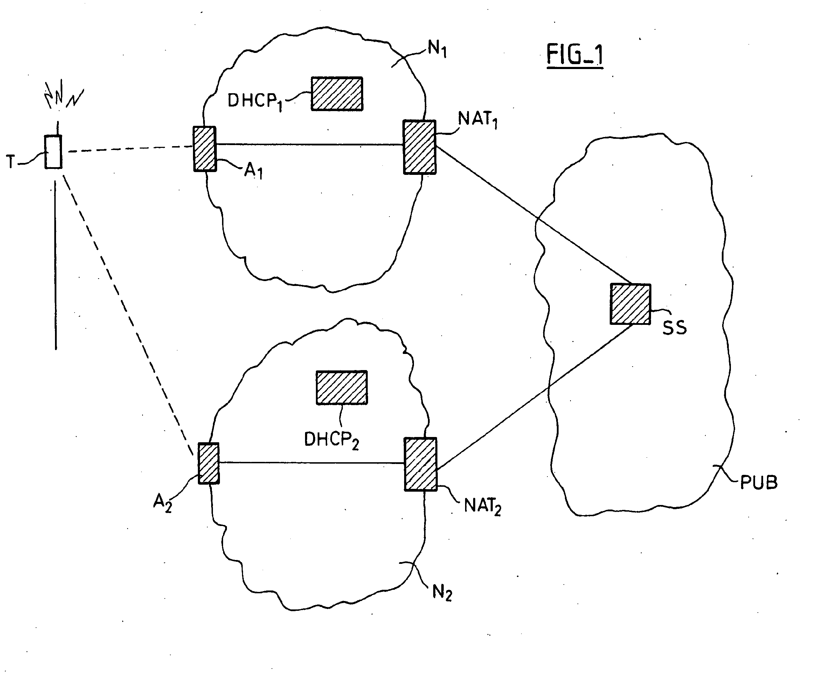

Ainsi qu'indiqué précédemment et que représenté par la figure 1, l'invention s'inscrit dans le cadre d'une session multimédia établie entre un terminal T et un second terminal non représenté. On entend par terminal tout équipement de communication permettant d'établir une session multimédia, c'est-à-dire de voix sur IP, de vidéo-phonie etc. Il peut s'agir d'un terminal mobile, conforme aux normes UMTS (*Universal Mobile Telecommunications System*) ou GPRS (*Global Packet Radio System*) par exemples, ou un assistant personnel numérique (PDA pour *Personal Digital Assistant*), un micro-ordinateur, un dispositif tel ceux vendus sous la marque Blackberry^{™} etc. De la même façon, les réseaux d'accès N₁, N₂ auxquels le terminal mobile peut se connecter peuvent être conformes à différentes technologies (GSM, UMTS...).
Dans le vocabulaire propre au protocole SIP, les terminaux sont considérés comme des clients. Dans la suite, les termes « client » et « terminal » seront considérés comme équivalents.

Dans le cas d'une conférence multi-partie, plusieurs autres terminaux peuvent être parties à la session multimédia.

Le réseau public PUB comporte un serveur de signalisation SS qui permet l'acheminement des messages de signalisation échangés entre les parties.
La figure 1 illustre essentiellement la partie de l'architecture des réseaux de communication qui relient ce serveur de signalisation SS et un terminal de communication T.
Les réseaux d'accès N₁, N₂ et le réseau de communication public PUB sont inter-connectés par des dispositifs de traduction d'adresses NAT₁, NAT₂. Les messages de signalisation échangés entre le terminal T et le serveur de signalisation SS sont donc transmis à travers ces dispositifs de traduction d'adresses NAT₁, NAT₂.

Au sein des réseaux d'accès N₁, N₂, les terminaux et noeuds disposent d'adresses attribuées indépendamment du réseau global. Autrement dit, aucune garantie n'est prise pour savoir si une adresse a déjà été attribuée ailleurs dans le monde. Les dispositifs de traduction d'adresses NAT₁, NAT₂ ont pour but d'isoler les réseaux d'accès en faisant en sorte que les adresses privées ne soient jamais utilisées dans les communications avec le réseau public PUB.

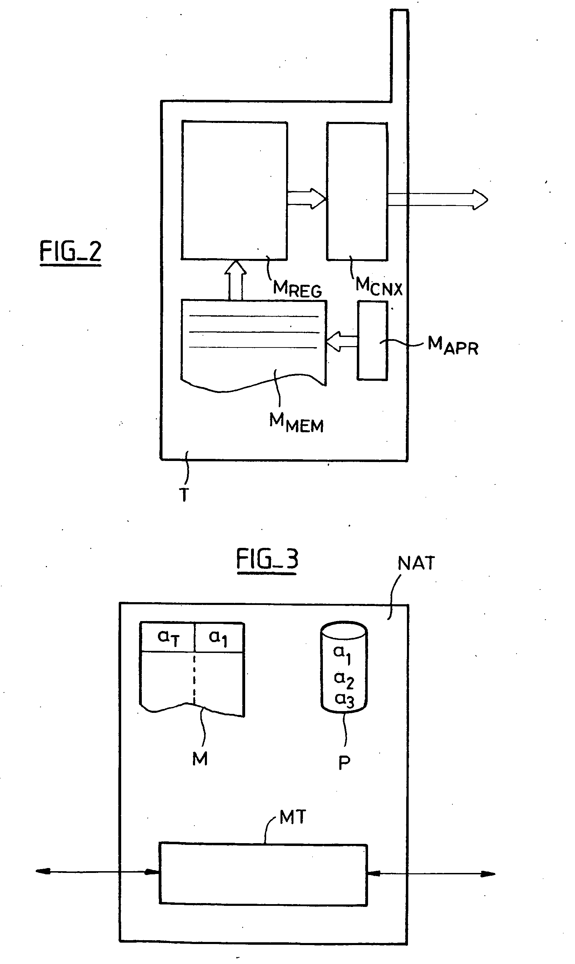

La figure 3 schématise un dispositif de traduction d'adresses NAT₁, NAT₂. Il dispose d'un ensemble P (ou « *pool* » en langue anglaise) d'adresses publiques disponibles a₁, a₂, a₃. Ces adresses, utilisables au sein de l'ensemble du réseau public PUB, sont fournies par l'IANA *(Internet Assigned Numbers Authority)* qui est l'organisme en charge de l'élaboration des plans d'adressage et de l'attribution unique des adresses publiques au sein du réseau public.
Lorsque le terminal T souhaite communiquer en dehors du réseau d'accès, le serveur de signalisation SS lui attribue une des adresses disponibles a₁ dans l'ensemble P d'adresses publiques, ainsi que dans le cas d'un dispositif de type NAPT, un port. Cette association entre coordonnées privées et publiques est mémorisée au sein d'une table d'association M (pour « Map » en langue anglaise) .
Le dispositif de traduction d'adresses dispose en outre de moyens de traductions MT pour traduire dans les deux sens les champs des paquets IP relatifs aux coordonnées du terminal T, et pour ajuster en conséquence les champs de codes de correction (« *checksum* »). Ainsi, les paquets provenant du terminal T auront, en sortie du dispositif de traduction d'adresses, l'adresses source a₁. Inversement, les paquets provenant du serveur de signalisation SS et adressés à ce terminal T auront comme adresses de destination a₁ ; la seule qui soit connue de ce serveur. Les moyens de traduction MT du dispositif de traduction d'adresses utilisent alors la table de correspondance M pour modifier les champs adresses de sorte que les paquets ressortent par l'interface du réseau d'accès avec comme adresse de destination, l'adresse privée a_{T}. Ces paquets peuvent alors être correctement acheminés au sein du réseau d'accès jusqu'au terminal destinataire T.

Le dispositif de traduction d'adresses possède en outre un compteur lui permettant de mesurer le temps durant lequel une association n'est pas utilisée. À expiration de ce délai d'expiration, l'association se termine.

La figure 2 schématise de façon fonctionnelle l'architecture du terminal de communication mobile T.
Celui-ci possède des moyens de connexion M_{CNX} qui lui permettent de se connecter à des réseaux d'accès N₁, N₂. Sur l'exemple de la figure 1, on suppose que le terminal mobile T est initialement connecté au réseau N₁ par l'intermédiaire d'une borne d'accès ou station de base A₁. Lorsqu'il se déplace dans le sens de la flèche, il sort de la zone géographique associée à la station de base A₁ et au réseau d'accès N₁ pour entrer dans celle de la station de base A₂ et du réseau d'accès N₂. Le terminal de communication mobile T opère alors un basculement (« *hand-over* » selon la terminologie en langue anglaise consacrée) et les moyens de connexion M_{CNX} terminent la connexion précédente et établissent une nouvelle connexion avec le réseau d'accès N₂.
Afin de se faire connaître du serveur de signalisation, les moyens d'enregistrement transmettent périodiquement des messages d'enregistrement vers ce serveur de signalisation SS à travers un dispositif de traduction d'adresses NAT₂. Selon le protocole SIP, ces messages d'enregistrement sont des messages « Register ».

Le terminal mobile de communication T comporte en outre une mémoire M_{MEM} qui associe une durée de validité à au moins certains des réseaux d'accès N₁, N₂.
Cette mémoire M_{MEM} est utilisée par les moyens d'enregistrement M_{REG} afin de déterminer la période selon laquelle ils doivent transmettre les messages d'enregistrement « Register » au serveur de signalisation SS.
Ainsi, connaissant le réseau d'accès auquel le terminal mobile de communication T est actuellement connecté, il est possible de rechercher dans la mémoire M_{MEM} la durée de validité qui lui est associée et de l'utiliser comme période pour transmettre les messages d'enregistrement « Register » à travers ce réseau d'accès. Lorsque le terminal T opère un basculement vers un autre réseau d'accès, les moyens d'enregistrement utilisent alors une nouvelle période de validité fournie par la mémoire M_{MEM} et correspondant au nouveau réseau d'accès.

Cette mémoire M_{MEM} peut avoir la forme d'une table de correspondance entre un identifiant de réseau d'accès (ID₁, ID₂, ID₃) et une valeur de durée de validité (d₁, d₂, d₃), ainsi qu'illustré par le tableau suivant :

| | |
|---|---|
| ID₁ | d₁ |
| ID₂ | d₂ |
| ID₃ | d₃ |

Plusieurs mises en oeuvre sont possibles pour ce qui concerne la façon d'identifier un réseau d'accès. Ces différentes façons et le type d'identifiant peut en outre dépendre de la technologie des réseaux d'accès.

Un identifiant peut être choisi comme étant l'identifiant d'un équipement unique des réseaux d'accès, c'est-à-dire d'un équipement qui n'existe normalement qu'en un seul exemplaire au sein d'un réseau donné. C'est par exemple le cas d'un serveur dynamique d'adresses de type DHCP (« *Dynamic Host Configuration Protocol* »), tel que défini par le RFC 2131 de l'IETF.
Un identifiant possible peut être l'adresse MAC de ce serveur dynamique d'adresses DHCP. Chaque réseau d'accès est en effet équipé d'un et d'un seul serveur dynamique d'adresses DHCP qui permet de conférer une adresse privée au terminal T lorsque celui-ci se connecte à ce réseau.
L'adresse MAC (« *Medium Access Control »),* par définition, permet d'identifier de façon unique un équipement raccordé à un réseau de communication. Un réseau d'accès ne possédant normalement qu'un seul serveur dynamique d'adresses DHCP, son adresse MAC peut être utilisée afin d'identifier le réseau d'accès.

Dans le cas particulier d'un réseau WiFi, tel que décrit par la norme 802.11, le réseau d'accès peut être identifié de façon unique par l'identifiant d'ensemble de services étendu (ESSID pour « *Extended Service Set Identifier* », abrégé en SSID).

Dans le cas particulier où un même réseau d'accès serait connecté au réseau public de communication PUB par plus d'un dispositif de traduction d'adresse, il est possible d'utiliser alors plusieurs identifiants pour ce même réseau d'accès. À chaque dispositif de traduction d'adresses correspond classiquement un serveur dynamique d'adresses DHCP. Par conséquent, la mémoire M_{MEM} peut, comme précédemment, associer à l'adresse MAC du serveur DHCP une valeur de durée de validité.

La mémoire M_{MEM} peut être initialement remplie de façon manuelle par configuration.
Il est toutefois préférable d'utiliser des procédés d'apprentissage permettant au terminal mobile T d'enrichir le contenu de cette mémoire de façon dynamique et automatique.
Selon une mise en oeuvre de l'invention, à chaque fois que le terminal mobile de communication T se connecte à un nouveau réseau d'accès (c'est-à-dire un réseau donc l'identifiant n'est pas déjà contenu dans la mémoire M_{MEM}), il peut déclencher une phase d'apprentissage.
Il dispose pour cela de moyens d'apprentissage M_{APR} dont le but est de déterminer une durée de validité pour ce nouveau réseau d'accès et à mettre à jour la mémoire M_{MEM} avec l'association entre cette durée de validité et le nouveau réseau d'accès.

Cet aspect dynamique et automatique permet au terminal mobile de communication T de ne pas nécessiter de configuration manuelle lorsqu'il se connecte à un réseau d'accès inconnu. Ainsi, même si l'utilisateur du terminal mobile se déplace dans une autre région (déplacement professionnel, vacances...), son terminal mobile de communication T demeure apte à se connecter de façon optimale aux réseaux d'accès.

Selon un mode de réalisation de l'invention, la mémoire (M_{MEM}) fait correspondre un âge à au moins certaines associations entre réseaux d'accès et délai de validité. Cet âge est le temps écoulé depuis la dernière visite du réseau d'accès. Si cet âge atteint un certain seuil, l'association est effacée du contenu de la mémoire M_{MEM}.

Cette caractéristique permet d'éviter l'engorgement progressif de la mémoire M_{MEM}. On peut en effet considérer que certains réseaux d'accès ne seront visités que dé façon exceptionnelle et qu'il est donc intéressant de supprimer le délai de validité qui leurs est associé, quitte à re-déclèncher une nouvelle procédure d'apprentissage lors d'une nouvelle connexion.

Le seuil peut être prédéterminé et il peut éventuellement être fonction des capacités en mémoire du terminal mobile de communication. Éventuellement, il peut aussi s'agir d'une option de l'utilisateur du terminal mobile M, puisque cette fonction est dépendante du type de comportement de l'utilisateur.

Un exemple de mécanisme d'apprentissage est donné par le RFC 3489 de l'IETF, intitulé « STUN - Simple Traversal of User Datagram Protocol (UDP) Through Network Address Translators (NATs) » de J. Rosenberg, J. Wenberger, C. Huitema et R. Mahy, publié en mars 2003. Un serveur particulier dit serveur STUN peut alors être utilisé pour analyser les requêtes en association des terminaux et déterminer les délais d'association.

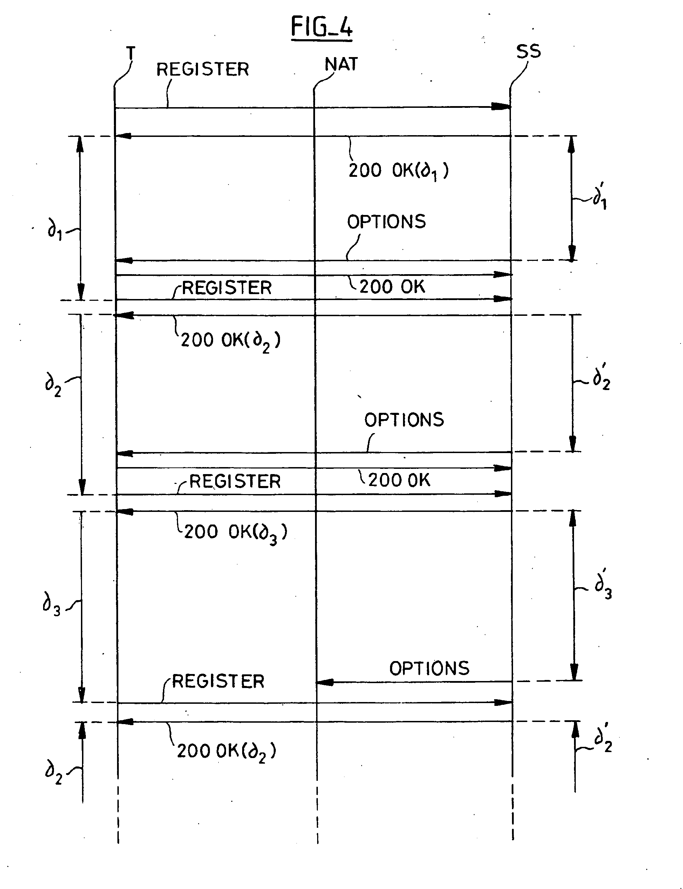

La figure 4 illustre les flux de messages de signalisation entre les parties à la communication pour un autre exemple de mécanisme d'apprentissage. Il est toutefois important de noter que l'invention ne saurait se limiter à cet exemple particulier et qu'au contraire elle peut se généraliser à toutes procédures d'apprentissage permettant à un terminal mobile de communication T d'enrichir sa mémoire M_{MEM} avec de nouvelles associations.

Dans cette mise en oeuvre particulière, les moyens d'apprentissages M_{APR} du terminal mobile de communication déterminent la durée de validité par réception de messages de réponse provenant du serveur de signalisation SS.
Cette figure possède un axe temporel orienté vers le bas. Chaque ligne verticale est représentative d'un élément de réseau : la ligne la plus à gauche représente le terminal T, la ligne du milieu le dispositif de traduction d'adresses NAT et la ligne de droite, le serveur de signalisation SS.
Les flèches horizontales représentent les messages de signalisation. Comme on le verra par la suite, ces message de signalisation peuvent être de différentes natures : des messages d'enregistrement « Register », des messages de test « Options », des messages de réponse « 200 Ok » etc. et d'autres types non utilisés dans l'invention. Du point de vue du vocabulaire, il est important de noter que le message de signalisation « Options » n'est pas en général un message de test : il véhicule cette signification uniquement dans le cadre de la présente invention.

Le premier message est un message d'enregistrement. Selon le protocole SIP, il peut s'agir d'un message « Register » tel que décrit au paragraphe 10 du RFC 3261 sus-mentionné.
Ce message permet au terminal T de se faire connaître du serveur de signalisation SS afin que celui-ci l'intègre dans sa base d'information regroupant l'ensemble des terminaux (plus généralement « clients SIP ») connus par ce serveur de signalisation SS.
Ce message comporte un entête comprenant un ensemble de champs obligatoires. Ainsi qu'indiqué au paragraphe 8.1 du paragraphe du RFC 3261, un message SIP doit comporter au moins les champs suivants : « To », « From », CSeq », « Call-ID », « Max-Forwards » et « Via ». En outre, un champ « Contact » peut être incorporé dans le message d'enregistrement « Register ». Les informations contenues dans le RFC 2361 relatives aux différents champs des messages du protocole SIP sont à la portée de l'homme du métier.

Le protocole SIP prévoit qu'une durée de validité du message d'enregistrement « Register » soit indiqué dans ce message. Il propose deux façons de préciser cette information :
- la durée de validité peut être indiquée dans un champ supplémentaire nommé « Expires », décrit au paragraphe 20.19 du RFC 3261 ;
- la durée de validité peut être indiquée dans un paramètre « Expires » du champ « Contact » ainsi que précisé dans les sections 10.2 et 20.10 de ce même RFC 3261.

Par défaut, les clients SIP (i.e. le terminal T) ne proposent pas de durée de validité.

À la réception de ce message d'enregistrement « Register », le serveur de signalisation SS analyse les champs du message et peut déterminer que le terminal émetteur T est situé derrière un dispositif de traduction d'adresses NAT. Cette détermination peut par exemple être faite par l'analyse du contenu du champ « Via » de l'entête.
Ainsi qu'explicité au paragraphe 8.1.1.7 du RFC 3261, le champ « Via » indique les noeuds de réseau par lesquels le message est transmis. En analysant le ou les champs « Via », il est tout à fait possible de déterminer qu'un message d'enregistrement est passé par un dispositif de traduction d'adresses NAT, et même de connaître son adresse.

Si le serveur de signalisation SS détecte que le client T est situé derrière un dispositif de traduction d'adresse NAT, une phase d'apprentissage d'une durée de validité optimale est déclenchée.

Pour ce faire, le serveur de signalisation détermine une approximation du délai d'expiration de l'association par envoi successif de messages de test avec un délai croissant jusqu'à détection de la terminaison de l'association.

Le serveur de signalisation SS répond tout d'abord au message d'enregistrement par un message de réponse « 200 Ok » spécifiée dans le protocole SIP par le RFC 3261. Ce message de réponse comporte une durée de validité fixée à une première valeur d₁. Cette première valeur d₁ est fixée de sorte qu'il soit assuré qu'elle soit inférieure au délai d'expiration de l'association du dispositif de traduction d'adresses NAT. Cette valeur est donc délibérément peu élevée, par exemple de l'ordre de 15 secondes.

Comme pour le message d'enregistrement « Register », le message de réponse « 200 ok » peut contenir la valeur d₁ en (au moins) deux emplacements différents, ouvrant la possibilité de deux modes de réalisation de l'invention :
- Dans un premier mode de réalisation, la durée de validité est transmise dans le champ « Expires » du message de réponse « 200 Ok ».
- Dans un seconde mode de réalisation, la durée de validité est indiquée dans un paramètre « Expires » du champ « Contact ».

Le client T est donc instruit par ce message de réponse « 200 Ok » qu'il doit re-émettre un message d'enregistrement « Register » au bout d'un délai d₁.

Parallèlement, le serveur de signalisation SS attend durant un délai d₁' légèrement inférieur au premier délai de validité d₁ avant d'émettre un message de test vers le client T.
Plus généralement, durant toute la phase d'apprentissage, les messages de réponses aux messages d'enregistrement contiennent une durée de validité légèrement supérieure au délai d'attente avant l'émission du prochain message de test.

Ce message de test vise à vérifier si l'association d'adresses au sein du dispositif de traduction d'adresses NAT est encore active ou non.

Il peut être mis en oeuvre par le message « Options » du protocole SIP qui permet à une partie de requérir les capacités d'une autre partie.
Un message « Options» comporte les mêmes champs qu'un message d'enregistrement « Register». Il peut également posséder un champ « Contact ».

Si l'association est encore effective au sein du dispositif de traduction d'adresses NAT entre les adresses publique et privée du client T, le message de test est transmis jusqu'au client T. À sa réception, celui-ci renvoie un message de réponse « 200 Ok » qui, à son tour, traverse le dispositif de traduction d'adresses NAT avant de parvenir au serveur de signalisation SS. Celui-ci est alors informé que l'association est toujours active au sein du dispositif de traduction d'adresses NAT. Il peut alors en déduire que le délai d'expiration de l'association est supérieur au délai d'attente d₁'.
Il peut alors tester une valeur plus élevée pour ce délai.

En réponse au second message d'enregistrement « Register », le serveur de signalisation SS répond par un message de réponse « 200 Ok » contenant une durée de validité fixée à une deuxième valeur d₂, supérieure à la première valeur d₁.
Parallèlement, le serveur de signalisation SS attend durant un délai d₂' légèrement inférieur au deuxième délai de validité d₂ avant d'émettre un message de test vers le client T, par exemple un message « Options ».
Comme précédemment, si l'association est toujours active au sein du dispositif de traduction d'adresses NAT, le serveur de signalisation reçoit un message de réponse « 200 Ok » à son message de test.

Il peut à nouveau incrémenter les valeurs des délais, sachant que délai d'expiration du dispositif de traduction d'adresses NAT est donc encore supérieur au délai d'attente d₂.

À réception du troisième message d'enregistrement « Register », le serveur de signalisation SS répond donc par un message de réponse « 200 Ok » contenant une durée de validité fixée à une troisième valeur d₃, supérieure à la deuxième valeur d₂.
Parallèlement, le serveur de signalisation SS attend durant un délai d₃' légèrement inférieur au troisième délai de validité d₃ avant d'émettre un message de test vers le client T, par exemple un message « Options ».

Dans l'exemple illustré par la figure 2, on suppose que ce troisième délai est supérieur au délai d'expiration du dispositif de traitement d'adresses NAT. Ce dernier ne peut alors pas transmettre le message de test « Options » vers le client T. Par conséquent, le serveur de signalisation SS ne reçoit jamais de message de réponse « 200 Ok ».
Au bout du délai de validité d₃, le terminal T transmet toutefois un message d'enregistrement « Register » qui crée une nouvelle association adresse publique/adresse privée au sein du dispositif de traduction d'adresses NAT. Ce message d'enregistrement « Register » est alors transmis à travers le dispositif de traduction d'adresses NAT jusqu'au serveur de signalisation SS.

Lorsqu'il reçoit ce message d'enregistrement « Register », le serveur de signalisation détermine que puisqu'il n'a pas reçu de message de réponse « 200 Ok » à son message de test « Options », le délai d'expiration du dispositif de traduction d'adresses NAT est inférieur à la dernière valeur testée d₃'. Plus précisément, il peut déterminer que la valeur approximative pour ce délai d'expiration est entre la valeur d₂' et la valeur d₃'.

### Exemples numériques

Les délais utilisés peuvent être conformes au tableau suivant:

| | |
|---|---|
| d₁ = 15 secondes | d₁' = 10 secondes |
| d₂ = 25 secondes | d₂' = 20 secondes |
| d₃ = 35 secondes | d₃' = 30 secondes |
| d₄ = 45 secondes | d₄' = 40 secondes |

Selon cet exemple, l'incrément est de 10 secondes entre deux valeurs consécutives. Il s'agit toutefois d'un exemple et il demeure tout à fait possible d'utiliser d'autres valeurs numériques.

Selon une première mise en oeuvre de l'invention, la phase d'apprentissage se termine lorsque aucune réponse n'est reçue à un message de test. Le serveur de signalisation SS peut alors considérer que la valeur précédente d₂ est la valeur optimale de la durée de validité des messages d'enregistrement « Register » et l'utiliser pour la suite. Il répond alors au message d'enregistrement « Register » avec la valeur d₂.
Il répondra avec cette valeur à tout nouveau message « Register » provenant du même terminal T, dans une étape d'utilisation.

De même il pourra utiliser cette même valeur d₂ avec tout nouveau terminal se situant derrière le même dispositif de traduction d'adresses NAT sans déclencher une phase d'apprentissage du délai d'expiration. Selon ce mode de réalisation, le serveur de signalisation SS dispose donc d'une table lui permettant d'associer à tout dispositif de gestion d'adresses NAT, un délai d'expiration approximatif.
Lorsqu'il détecte qu'un client donné est situé derrière un dispositif de traduction d'adresses donné, il dispose de moyens pour utiliser directement le délai d'expiration approximatif associé à ce dispositif de traduction d'adresses donné, sans passer par l'étape d'apprentissage.
Ce mode de réalisation permet de s'affranchir des phases d'apprentissage de ces délais d'expiration et de passer directement à une étape d'utilisation et donc d'économiser des ressources du réseau en diminuant le nombre des messages qui sont échangés durant l'étape d'apprentissage.

Selon une seconde mise en oeuvre de l'invention, le serveur de signalisation peut rechercher à optimiser encore la valeur approximative à utiliser comme durée de validité des messages d'enregistrement « Register ». Il peut alors procéder par dichotomie et tester des durées d'attente et de validité intermédiaire, jusqu'à obtenir une approximation suffisante du délai d'expiration du dispositif de traduction d'adresses NAT. À ce moment uniquement, il passe dans une étape d'utilisation, où la valeur ainsi déterminée est utilisée dans son échange avec le client.

Selon l'invention, il existe donc un lapse de temps durant lequel le terminal T n'est pas accessible par le réseau de communication. En effet, dès lors que le message de test comporte une valeur supérieure au délai d'expiration du dispositif de traduction d'adresses, le terminal T est inaccessible jusqu'au prochain message d'enregistrement « Register ». Ainsi, si un message d'invitation « Invite » arrive au serveur de signalisation à destination du client T, il ne sera pas à même d'y répondre puisqu'il n'est à ce moment précis plus connecté au client T.
Ce lapse de temps est toutefois négligeable si les incréments entre deux valeurs consécutives dᵢ/dᵢ₊₁ sont suffisamment faibles.

Il peut toutefois être prévu que lors d'un appel vers ce client T durant ce lapse de temps, le serveur de signalisation re-achemine cet appel vers un serveur vocal, informant l'appelant que le client T sera disponible dans quelques secondes.

## Revendications

1. Terminal mobile de communication (T), comportant des moyens de connexions (M_{CNX}) à des réseaux d'accès (N₁, N₂) et des moyens d'enregistrement (M_{REG}) pour transmettre périodiquement des messages d'enregistrement à un serveur de signalisation (SS) situé au sein d'un réseau public de communication (PUB) connecté auxdits réseaux d'accès, ledit terminal étant **caractérisé en ce qu'**il dispose en outre d'une mémoire (M_{MEM}) apte à associer une durée de validité à au moins certains desdits réseaux d'accès et **en ce que** lesdits moyens d'enregistrement (M_{REG}) sont prévus pour transmettre lesdits messages d'enregistrement selon une période égale à la durée de validité associée au réseau d'accès (N₁, N₂) auquel ledit terminal (T) est connecté.

2. Terminal mobile de communication selon la revendication 1, dans lequel ladite durée de validité est relative à la durée de validité de l'association entre l'adresse privée dudit terminal mobile de communication et une adresse publique, mémorisée par un dispositif de traduction d'adresses (NAT₁, NAT₂) reliant un réseau d'accès audit réseau public.

3. Terminal mobile de communication (T) selon l'une des revendications précédentes, disposant en outre de moyens d'apprentissage (M_{APR}) pour, à chaque fois que ledit terminal mobile de communication se connecte à un nouveau réseau d'accès, déclencher une phase d'apprentissage pour déterminer une durée de validité et mettre à jour ladite mémoire avec l'association entre ladite durée de validité et ledit nouveau réseau d'accès.

4. Terminal mobile de communication (T) selon l'une des revendications précédentes, dans lequel lesdits réseaux d'accès sont identifiés par un identifiant d'un équipement unique desdits réseaux d'accès.

5. Terminal mobile de communication (T) selon la revendication 4, dans lequel redit équipement unique est un serveur dynamique d'adresses DHCP.

6. Terminal mobile de communication (T) selon l'une des revendications 4 à 5, dons lequel lesdits identifiants sont des adresses MAC.

7. Terminal mobile de communication selon l'une des revendications précédentes, dans lequel ladite mémoire (M_{MEM}) fait correspondre un âge à chaque association entre un réseau d'accès et une durée de validité et dans lequel lorsque ledit âge atteint un seuil, ladite association est effacée de ladite mémoire (M_{MEM}).

8. Terminal mobile de communication selon l'une des revendications précédentes, dans lequel lesdits messages d'enregistrement sont des messages « Register » du protocole SIP.

9. Terminal mobile de communication selon l'une dés revendications 3 à 8, dans lequel lesdits moyens d'apprentissage (M_{APR}) déterminent ladite durée de validité par réception de messages de réponse provenant dudit serveur de signalisation (SS);

10. Terminal mobile de communication selon la revendication précédente, dans lequel ladite durée de validité est contenue dans un champ « Expires », ou bien dans un paramètre « Expires » d'un champ « Contacts » desdits messages de réponse.

## Claims

1. A mobile communication terminal (T) comprising connection means (M_{CNX}) for connecting to access networks (N₁,N₂) and registration means (M_{REG}) for periodically transmitting registration messages to a signaling server (SS) located within a public communication network (PUB) connected to said access networks, said terminal being **characterized in that** it also has a memory (M_{MEM}) capable of associating a validity period with at least some of said access networks, and **in that** said registration means (M_{REG}) are provided for transmitting said registration messages with a periodicity equal to the validity period associated with the access network (N₁, N₂) to which said terminal (T) is connected.

2. A mobile communication terminal (T) according to claim 1, wherein said validity period is relative to the validity period of the association between the private address of said mobile communication terminal and a public address, saved in memory by an address translation device (NAT₁, NAT₂) linking an access network to said public network.

3. A mobile communication terminal (T) according to one of the preceding claims, further having learning means (M_{APR}) for initiating, every time that said mobile communication terminal connects to a new access network, a learning phase for determining a validity period and updating said memory with the association between said validity period and said new access network.

4. A mobile communication terminal (T) according to one of the preceding claims, wherein said access networks are identified by an identifier of a unique device of said access networks.

5. A mobile communication terminal (T) according to claim 4. wherein said unique device is a DHCP dynamic address server.

6. A mobile communication terminal (T) according to one of claims 4 to 5, wherein said identifiers are MAC addresses.

7. A mobile communication terminal according to one of the preceding claims, wherein said memory (M_{MEM}) matches up an age to each association between an access network and a validity period and wherein when said age reaches a threshold, said association is erased from said memory (M_{MEM}).

8. A mobile communication terminal according to one of the preceding claims, wherein said registration messages are "Register" messages of the SIP protocol.

9. A mobile communication terminal according to one of claims 3 to 8, wherein said learning means (M_{APR}) determine said validity period by receiving reply messages from said signaling server (SS).

10. A mobile communication terminal according to the preceding claim, wherein said validity period is contained within an "Expires" field, or within an "Expires" parameter of a "Contacts" field of said reply messages.

## Patentansprüche

1. Mobiles Kommunikattorisendgerät (T) mit Mitteln für den Anschluss (M_{CNX}) an Zugangsnetzwerke (N₁ N₂) und Registrierungsmitteln (M_{REG}) zum periodischen Übertragen von Registrterungshachrichten an einen Signalisierungsserver (SS) innerhalb eines öffentlichen Kommunikationsnetzwerks (PUB), welches an die besagten Zugangshetzwerke angebunden ist, wobei das besagte Endgerät **dadurch gekennzeichnet ist, dass** es weiterhin über einen Speicher (M_{MEM}) verfügt, welcher dazu ausgelegt ist, mindestens bestimmten der besagten Zugangsnetzwerke eine Gültigkeitsdauer zuzuordnen, und dass die besagten Registrierungsmittel (M_{REG}) dafür vorgesehen sind, die besagten Registrierungsnachrichten gemäß einer Periode, welche der dem Zugangsnetzwerk (N₁, N_{2,}), an welches das besagte Endgerät (T) angeschlossen ist, zugeordneten Gültigkeitsdauer entspricht, zu übertragen.

2. Mobiles Kommunikationsendgerät nach Anspruch 1, wobei sich die besagte Gültigkeitsdauer auf die Gültigkeitsdauer der Assoziation zwischen der Privatadresse des besagten mobilen Kommunikationsendgerats und einer öffentlichen Adresse, welche in einer Adressenübersetzungsvorrichtung (NAT₁ NAT₂), die ein Zugangsnetzwerk mit dem besagten öffentlichen Netzwerk verbindet, gespeichert ist, bezieht.

3. Mobiles Kommunikationsendgerät (T) nach einem der vorstehenden Ansprüche, welches weiterhin über Lernmittel (M_{APR}) verfügt, um jedes Mal, wenn sich das besagte mobile Kommunikationsendgerät an ein neues Zugangsnetzwerk anschließt, eine Lernphase auszulösen, um eine Gültigkeitsdauer zu ermitteln und den besagten Speicher mit der Assoziation zwischen der besagten Gültigkeitsdauer und dem besagten neuen Zugangsnetzwerk zu aktualisieren.

4. Mobiles Kommunikationsendgerät (T) nach einem der vorstehenden Ansprüche, wobei die besagten Zugangsnetzwerke anhand einer Kennung eines einzelnen Gerätes der besagten Zugangsnetzwerke identifiziert werden.

5. Mobiles Kommunikationsendgerät (T) nach Anspruch 4, wobei das besagte einzelne Gerät ein dynamischer Adressen-Server DHCP ist.

6. Mobiles Kommunikationsendgerät (T) nach einem der Ansprüche 4 bis 5, wobei die besagten Kennungen MAC-Adressen sind.

7. Mobiles Kommunikationsendgerät nach einem der vorstehenden Ansprüche, wobei der besagte Speicher (M_{MEM}) dafür sorgt, dass jeder Assoziation zwischen einem Zugangsnetzwerk und einer Gültigkeitsdauer ein Alter entspricht, und wobei, wenn das besagte Alter einen Grenzwert erreicht, die besagte Assoziation aus dem besagten Speicher (M_{MEM}) gelöscht wird.

8. Mobiles Kommunikationsendgerät nach einem der vorstehenden Ansprüche, wobei die besagten Registrierungsnachrichten "Register"-Nachnchten des SIP-Protokolls sind.

9. Mobiles Kommunikationsendgerät nach einem der Ansprüche 3 bis 8, wobei die besagten Lernmittel (M_{APR}) die besagte Gültigkeitsdauer anhand des Empfangs von Antwortnachrichten von dem besagten Signalisierungsserver (SS) ermitteln.

10. Mobiles Kommunikationsendgerat nach dem vorstehenden Anspruch, wobei die besagte Gültigkeitsdauer in einem "Expires"-Feld oder in einem "Expires"-Parameter eines "Contacts"-Feldes der besagten Antwortnachrichten enthalten ist.
